# EUROPEAN PATENT APPLICATION

(11) **EP 2 722 772 A1**
(43) Date of publication of application: **23.04.2014**
(21) Application number: 12306272.1
(22) Date of filing: 16.10.2012
(51) Int. Cl.: G06F 13/40

(54) **Backplane**

(71) Applicant: Alcatel Lucent, 75007 Paris (FR)
(72) Inventor: Borghs, Eric, 2440 Geel (BE); Hooghe, Koen, 2600 Berchem (BE); Li, Zheng, 9160 Lokeren (BE); Kozicki, Bartlomiej, 2600 Berchem (BE)
(74) Representative: D'Halleweyn, Nele Veerle Trees Gertrudis

(57) **Abstract**

Backplane for a networking equipment device, the backplane comprising N slots each slot being provided for receiving a data communication card, N being an integer larger than or equal to 5, wherein the slots are interconnected via a chain-topology in such a manner that each slot in the chain from the 3th until the N-2th is connected to its direct neighbours via a first and a second physical communication link and is connected to its neighbour's neighbours via a third and a fourth of physical communication link.

## Description

### Technical Field

The present invention relates to networking equipment, and particularly to a backplane for networking equipment.

### Background

Networking equipment is widely used and known in a variety of situations where devices interact with one another. Networking equipment comprises telecommunication nodes such as routers, switches and access nodes, but is not limited to telecommunication nodes. Networking equipment also comprises data centers (where there is interaction between multiple data handling/storing devices) and super computers (where there is interaction between multiple processing units). Network equipment is characterized by multiple devices/cards/units that are interconnected typically via a backplane in order to be able to communicate with one another. Thereby the interconnections are typically implemented on the backplane (hardwired or via a printed-circuit board). The interconnection topology used in such backplanes is hereunder described taking an access node as an example. Although the explanation is made concrete by describing an access node, the invention is applicable in networking equipment in general.

Access nodes are known in data communication networks as the nodes that connect the consumer (private or business) to the service providers. In a simplified manner, an access node can be seen as a box where on the one hand multiple data communication cables arrive coming from multiple consumers, and on the other hand, one or more network cables arrive connecting the access node to the network. Thereby, the access node forms the connection between the data network and the consumer.

Typically, these access nodes are formed by multiple modules. These modules are interconnected so that data can be transmitted over different modules. In one configuration, an access node comprises multiple line termination modules, and comprises one or two network termination modules. If two network termination modules are provided, one can serve as a back-up for the other network termination module.

In the art, different topologies are known to connect the cards in an access node. The most used topology to connect multiple line termination cards with a network termination card is a star topology. Thereby the network termination card is placed in the middle of the star point, and each line termination module is connected via a physical communication link to the central network communication cards, thereby forming a star. In practice, the physical communication links are provided on a backplane, in which slots are provided for receiving the data communication cards. Thereby, the backplane implements the topology and connects the different data communication cards according to the topology. An advantage of the backplane implementing a star topology to connect the data communication cards, is that empty slots in the backplane do not influence the connection between the slots that are present in the access node. A drawback of a backplane implementing a star topology is that a complex web of physical communication links has to be formed on the backplane.

Another drawback of a backplane implementing a star topology, and an access node where the data communication cards are interconnected via a star topology, is that the step-in costs are high. The reason for this is that, when installing an access node with a star topology with only few cards, still at the star point, a switch must be provided that is dimensioned for a fully populated backplane. Such switch is expensive, thereby significantly increasing the step-in costs for an access node implementing a star topology.

A known alternative for a star topology is a ring topology. In a ring topology, the multiple data communication cards are each connected to their neighbours and in such a manner that a closed ring is formed. The advantage of an access node implementing a ring topology, is that each data communication card is connected to its neighbour, which is physically close, so that a communication link having a short distance can be used. This allows high data speeds. When one data communication card communicates with another data communication card in a ring topology, two transmission paths are available being one in the clockwise direction and one in the counterclockwise direction (first ring direction and second ring direction). Thereby, a back-up is provided in case one data communication card breaks down (fail-safe operation). A disadvantage of an access node having a ring topology is that to ensure correct communication between the data communication cards in the ring topology (including a back-up communication path) all slots in the backplane of the access node must be filled. Otherwise, the ring is not closed, and back-up cannot be provided. A ring topology enables distributed switching, and thereby the expensive star point switch of the star-topology is not present in a ring topology access node. However, because the ring has to be closed for fail safe reasons, still high step-in costs arise because all slots must be filled.

It is an object of the present invention to provide a backplane for a networking equipment device where step-in cost is lower.

### Summary

To this end, the invention provides a backplane for a networking equipment device, the backplane comprising N slots, each slot being provided for receiving a data communication card, and being an integer larger than or equal to 5, wherein the slots are interconnected via a chain topology in such a manner that each slot in the frame from the 3^{rd} until the n-2^{th} is connected to its direct neighbours respectively via a first and a second physical communication link and is connected to its neighbours' neighbours respectively via a third and a fourth physical communication link.

The chain connection allows, analogue to the ring topology, to connect adjacent slots with short data communication link. Thereby, high data transmission speed can be obtained. Because, the slots are not only connected to their neighbours, but also to their neighbours' neighbours, data transmission can be guaranteed, even when a data communication card in a slot fails. This creates failure resilience. Namely, via the neighbours' neighbours connections, this failing data communication card can be bypassed, and data can still be transmitted along the chain. As a result, no ring or closed loop connection is required to ensure fail-safe data transmission. Also, because the fail-safe system does not depend on a ring structure, but is implemented via the chain connection, slots can be left empty without data transmission becoming critical (critical meaning no fail-safe arrangement is implemented). Thereby, as long as the filled slots lay adjacent to one another, fail-safe data transmission can be guaranteed. Thereby, the proposed chain topology allows high speed data transmissions analogue to the ring topology, while it provides flexibility of use (meaning that slots can be left empty and be filled as the situation requires) analogue to the star topology. The chain topology as proposed in the invention thereby combines the advantages of the two known topologies. Furthermore the switching is distributed over the chain so that no expensive star-point-switch is necessary. Also it is possible to leave slots empty. Furthermore delay reductions and higher bandwidth can be obtained because there are two parallel communication links (one connecting the neighbours and the other connecting the neighbour's neighbours). The combination of these technical advantages is a backplane and access node with lower step-in costs while maintaining or even enhancing operational performance capabilities.

Preferably, the first slot is connected via a further physical communication link to the second slot, and the end slot is connected to a yet further physical communication link to the n-1 slot. By connecting the first and the last slot in the chain to their neighbour (the second slot and the n-1 slot), fail-safe operation of these first and last slots is provided.

Preferably, each communication link comprises two physically separated paths, each path being provided for transferring data signals in one of two directions to thereby allow bidirectional communication between connected slots. By providing separated paths for communicating in opposite directions, communication can be optimized and high data transfers can be obtained.

Preferably, the communication links are formed on a printed circuit board. A printed circuit board is, in comparison to loose-wire connections, relatively cheap and easy to manufacture. Also the reliability of a printed circuit board has proven to be high.

Preferably, over at least a segment of the chain all communication links are duplicated, thereby creating doubled independent communication ways between the slots in this segment. By duplicating communication links so that two independent communication pathways are created, transmission speed between slots in this segment can be (theoretically) doubled. In this manner, data flows can be optimized, depending on the estimated amount of data to be transferred between slots.

Preferably, the segment is located somewhere in the middle of the chain and covering about n/2 slots. Because all data traffic from and to data communication cards in the slots are transferred over the one chain, a higher amount of data traffic can be expected in the middle segment of the chain, compared to the other segments of the chain. Accordingly, in a one chain configuration, the switches in the data communication cards are dimensioned so that they can handle the highest estimated amount of data traffic in the access node. Since this highest estimated amount of data traffic will only occur in the middle segment of the chain, the switches on the outer ends of the chain are overdimensioned and therefore more expensive than necessary. In this context, the word overdimensioned must be interpreted as larger than necessary meaning that the switches are built with large capacity margin. By creating two independent communication ways between slots in a middle segment of the chain, the higher amount of data traffic can be handled by the double chain. This allows to use cheaper switches whereby the cards in the middle segment are provided with duplicated switches (since the communication links are duplicated), a switch being provided for each communication link). This allows the cards to be provided with (relatively) slower and cheaper switches in such a manner that no significant overdimensioning of switch capacity is needed to avoid a bottleneck in the chain. Thereby, the extra cheaper switches incur fewer costs than overdimensioning all the switches in the chain.

Preferably, N is an integer obtained by the formula (Y x Z) + 2, whereby Y is an integer equal to or larger than 2, and whereby Z is 2 or preferably 4. In the formula, the number 2 represents the network termination cards of which two are conventionally provided in a backplane for a telecommunication node such as an access node. These network termination cards are preferably provided in the center of the backplane. The Y in the formula is the amount of cards that are provided in one card block, a card block being a block where line termination cards are grouped. The Z represents the amount of blocks that are present in the backplane. Thereby, two blocks are provided, one to the left of the network termination cards, and one to the right of the network termination cards. In the case where two independent communication ways are provided in the chain, four blocks are created, two on the left of the network termination cards, and two on the right of the network termination cards, where the two independent communication ways provide connection between the different blocks, and the network termination cards.

Preferably, one or two slots are provided to receive network termination cards, whereas the other slots are provided to receive line termination cards. Typically, an access node comprises two network termination cards, providing connection to the service provider (the network), and comprises multiple line termination cards, each line termination card connecting a number of end consumers to the network.

Preferably, the one or two slots for receiving network termination cards are located in the middle of the chain. Thereby, data traffic can be optimally and evenly distributed through the chain.

The invention further provides an access node, comprising a backplane according to the invention and comprising at least two data communication cards provided in adjacent slots of the backplane. Thereby, at least two data communication cards are chosen from network termination cards and line termination cards. Preferably, two network termination cards are provided in a middle segment of the backplane.

### Brief description of the figures

Some embodiments of apparatus and/or methods in accordance with embodiments of the present invention are now described, by way of example only, and with reference to the accompanying drawings, in which:
figure 1 illustrates a backplane topology according to the prior art;
figure 2 illustrates a backplane topology according to an example of the invention; and
figure 3 illustrates a further backplane according to another example of the invention.

In the drawings a same reference number has been allocated to a same or analogous element.

### Detailed description of embodiments

In the present description, the term data and data communication must be interpreted in a broad manner. Any signal being sent from one to another unit classifies as data. Therefore, also voice or speech transmissions, which might in some interpretations not be regarded as data, are in the present description considered data. Preferably data in the present description is digital data thereby excluding analogue signals from being data. However digital voice is considered data in each interpretation.

In the further description, the invention is explained using the example of an access node. In an access node, line termination cards and network termination cards are located and provided to communicate with each other. However the invention is applicable in a broader field and is applicable to all networking equipment devices. Thereby, networking equipment devices are devices where modules/cards/boards are mounted in slots of a backplane and are provided to communicate with one another. However, for clarity purposes, the explanation is given with the non-limiting example of an access node. Based on the principles which are explained hereunder and are applied to the access node situation, a skilled person can apply the teaching to other networking equipment devices. The invention is particularly relevant for telecommunication nodes such as Access nodes, Routers and Switches.

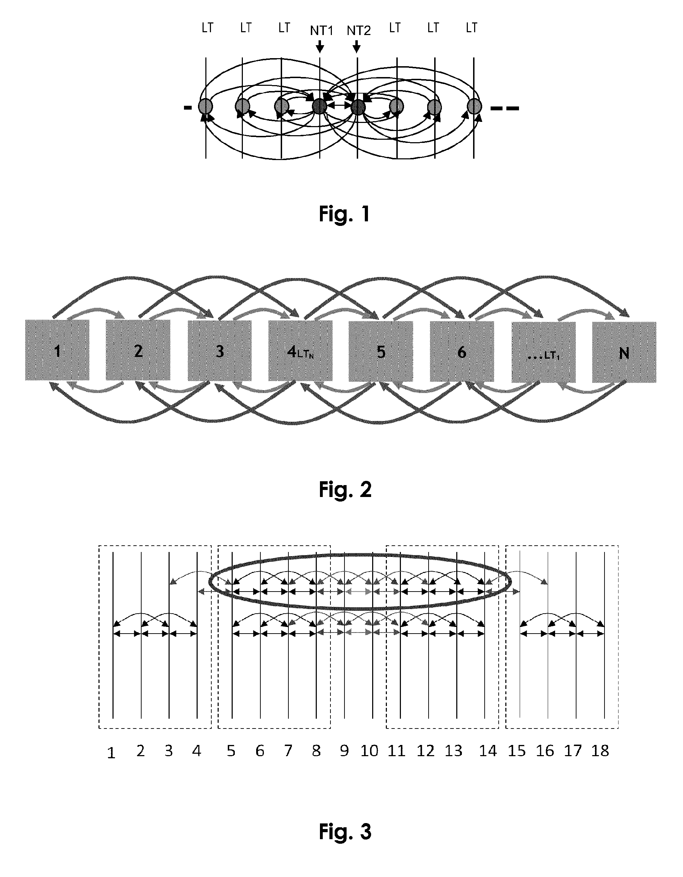

Figure 1 illustrates a backplane according to the prior art. The figure shows two network termination cards NT1 and NT2, and shows six line termination cards LT. Thereby, the second network termination card NT2 typically serves as a back-up for the first network termination card NT1, so that when the first network termination card NT1 fails, the second network termination card can take over functionality. To this end, each line termination card LT is connected via a physical communication link to each of the network termination cards. As a result, the network termination cards are located in a star point.

The network termination cards are provided to connect the access node with the network or with the service provider. To this end it comprises one or multiple, typically high-speed data communication links. Via these data communication links, the network termination cards send data and receive data from the network.

The line termination cards LT are provided to connect a predetermined number of consumers (private or business consumers) with their service provider and the network. To this end the line termination cards are provided to terminate the line coming from the consumer and transfer the data to and from the network termination cards, so that connection is established between the consumers and the network. In order to form a connection between the line termination cards and each network termination card, a switch is provided at the network termination card. This switch enables communication over the star point.

As can be seen in the figure, some line termination cards at the edges are physically further apart from the network termination cards than other line termination cards in the center. This physical distance is bridged via physical communication links. However, the longer the physical communication link, the more the *'highest possible* data *speed'* over the communication link is limited. Furthermore, in a case where only one or two line termination cards are present in the access node, still the star point switch has to be provided, making such access node expensive.

Figure 2 shows a chain topology connecting N card slots. In this chain topology, each slot is connected to its direct neighbours (if direct neigbours are present, particularly at the edges of the chain), and each slot is connected to its neighbours' neighbours (if present, particularly at the edges of the chain). Thereby, the chain can be provided with one or two ends, or can be endless (not shown). In an endless chain, the backplane can be provided with connections so that the chain on the backplane can be linked with other backplane's chains so that an endless chain is formed.

Using a chain topology, network termination modules can be provided in the middle slots of the chain, analogue to the star topology. The line termination cards can be provided in adjacent slots. However, not all line termination cards are directly coupled to the network termination cards as in a star topology. In the chain topology, each line termination card is connected to the network termination card directly or indirectly via the chain.

In the chain, fail safe operation is implemented because the slots are not only connected to their neighbours, but also to their neighbours' neighbours, thereby providing for a back-up connection in case one slot fails. A further advantage of the chain topology is that the physical distance of the communication links is limited. The shorter the physical data communication link, the higher the data transmission speed that can be reached.

Where in a star topology all switching is executed by the star point switch, in the chain topology, the switching activity is distributed over the chain. Figure 3 shows a preferred embodiment of a backplane according to the invention that is suitable for an access node. The figure shows a stack having 18 slots whereby the two slots in the middle, being slots 9 and 10, are provided for receiving network termination cards. The other slots, being slots 1-8 and 11-18 are provided to receive line termination cards. Thereby, a first chain is provided between slot 5 and slot 14 connecting these and intermediary slots with each other. A second chain is provided for connecting the slots 1-4 and the slots 15-18 with the network termination slots 9 and 10. Thereby, a direct connection between the slots 3,4,15,16 and slots 9,10 can be provided (not shown), or alternatively as shown in figure 3, the chain can run over the intermediary located slots. In such configuration, all communication links in the middle segment of the chain (form the 5^{th} until the 14^{th} slot) are duplicated, so that a double amount of communication links is available in this middle segment. This allows to transmit data over two distinct communication paths. As a result, in this middle segment, significantly higher data transmission can be reached. The reason for this construction is that, because the network termination cards are located in the middle of the access node, data traffic will concentrate from the line termination cards towards the middle of the chain, as all line termination cards located at the edge of the chain transmit their data over the chain. As a result, data traffic increases towards the middle of the chain. Since line termination cards are preferably identical, the switches provided in the line termination card or network termination card for forming the chain must be dimensioned, so that they can handle the highest possible amount of data traffic. Therefore, in a one-chain configuration, these switches are dimensioned for the amount of data traffic that is expected or that can be expected in the middle of the chain (where the amount of data traffic is the highest). As a result, line termination cards located at the edges of the chain have switches that are significantly overdimensioned. By providing a two-chain configuration as is shown in figure 3, data traffic is divided over the two chains, so that peaks in amount of data traffic normally rising in the middle of the chain is significantly decreased. Since the data traffic is more equally spread over the two chains, there is no need to overdimension the switches in the line termination cards.

The line termination cards that are provided in the middle segment of the chain (where the communication links are duplicated), can be provided with a further switching module for forming the further chain.

The access node is preferably formed in a housing comprising a frame where a printed circuit board is provided. The printed circuit board comprises the physical data communication paths that extend between adjacent slots. Furthermore, the frame and/or printed circuit board provides connecting means for connecting line termination modules and/or network termination modules can be mounted in the housing of the access node, so that they are connected to the printed circuit board. Thereby, the modules connected to the printed circuit board are interconnected according to the topology implemented on the printed circuit board.

The backplane implementing the chain topology, according to the invention, provides further advantages. It allows to maintain the current configuration of two network termination cards and multiple line termination cards. However it also becomes possible to distribute the network termination card functionality over the multiple line termination cards. Particularly when multiple data communication lines come from the network (for example 4), it might be advantageous to distribute the network termination card functionalities over four line termination cards which are each connected to one of the data communication lines from the network. The chain also allows to locate the network and line termination cards at different slots thereby deviating from the conventional setup where the network termination cards are always located in the middle slots. The placement of the cards in the chain can be chosen depending on data transmission estimations over the chain.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Backplane for a networking equipment device, the backplane comprising N slots each slot being provided for receiving a data communication card, N being an integer larger than or equal to 5, wherein the slots are interconnected via a chain-topology in such a manner that each slot in the chain from the 3th until the N-2th is connected to its direct neighbours via a first and a second physical communication link and is connected to its neighbour's neighbours via a third and a fourth of physical communication link.

2. Backplane according to claim 1, wherein the 1^{st} slot is connected via a further physical communication link to the 2^{nd} slot and wherein the Nth slot is connected via a yet further physical communication link to the N-1th slot.

3. Backplane according to claim 1 or 2, wherein each communication link comprises two physically separated paths, each path being provided for transferring data signals in one of two directions to thereby allow bidirectional communication between connected slots.

4. Backplane according to any one of the previous claims, wherein the communication links are formed on a printed circuit board.

5. Backplane according to any one of the previous claims, wherein over at least a segment of the chain all communication links are duplicated thereby creating two independent communication ways between the slots in this segment.

6. Backplane according to claim 5, wherein the segment is located somewhere in the middle of the chain and covering about N/2 slots.

7. Backplane according to any one of the previous claims, wherein N is an integer obtained by the formula (YxZ)+2, whereby Y is an integer equal to or larger than 2, and whereby Z is 2 or preferably 4.

8. Backplane according to any one of the previous claims, wherein the backplane is provided for a telecommunication node.

9. Backplane according to claim 8, wherein the backplane is proided for an access node.

10. Backplane according to claim 9, wherein one or two slots are provided to receive network termination cards whereas the other slots are provided to receive line termination cards.

11. Backplane according to claim 10, wherein said one or two slots are located in the middle of the chain.

12. A networking equipment device comprising a backplane according to any one of the previous claims and comprising at least two data communication cards provided in adjacent slots of the backplane.

13. A networking equipment device according to claim 12, wherein the networking equipment device is an access node and wherein said at least two data communication cards are chosen from network termination cards and line termination cards.

14. A networking equipment device according to claim 12 or 13, wherein two network termination cards are provided in a middle segment of the backplane.

## Amended claims

### Amended claims in accordance with Rule 137(2) EPC.

**1.** Backplane for a networking equipment device, the backplane comprising N slots each slot being provided for receiving a data communication card, N being an integer larger than or equal to 5, wherein the slots are interconnected via a chain-topology, wherein each slot in the chain from the 3th until the N-2th is connected to its direct neighbours via a first and a second physical communication link and is connected to its neighbour's neighbours via a third and a fourth of physical communication link.

**2.** Backplane according to claim 1, wherein the 1^{st} slot is connected via a further physical communication link to the 2^{nd} slot and wherein the Nth slot is connected via a yet further physical communication link to the N-1th slot.

**3.** Backplane according to claim 1 or 2, wherein each communication link comprises two physically separated paths, each path being provided for transferring data signals in one of two directions to thereby allow bidirectional communication between connected slots.

**4.** Backplane according to any one of the previous claims, wherein the communication links are formed on a printed circuit board.

**5.** Backplane according to any one of the previous claims, wherein over at least a segment of the chain all communication links are duplicated thereby creating two independent communication ways between the slots in this segment.

**6.** Backplane according to claim 5, wherein the segment is located somewhere in the middle of the chain and covering about N/2 slots.

**7.** Backplane according to any one of the previous claims, wherein N is an integer obtained by the formula (YxZ)+2, whereby Y is an integer equal to or larger than 2, and whereby Z is 2 or preferably 4.

**8.** Backplane according to any one of the previous claims, wherein the backplane is provided for a telecommunication node.

**9.** Backplane according to claim 8, wherein the backplane is proided for an access node.

**10.** Backplane according to claim 9, wherein one or two slots are provided to receive network termination cards whereas the other slots are provided to receive line termination cards.

**11.** Backplane according to claim 10, wherein said one or two slots are located in the middle of the chain.

**12.** A networking equipment device comprising a backplane according to any one of the previous claims and comprising at least two data communication cards provided in adjacent slots of the backplane.

**13.** A networking equipment device according to claim 12, wherein the networking equipment device is an access node and wherein said at least two data communication cards are chosen from network termination cards and line termination cards.

**14.** A networking equipment device according to claim 12 or 13, wherein two network termination cards are provided in a middle segment of the backplane.
